# EUROPEAN PATENT SPECIFICATION

(11) **EP 2 079 140 B1**
(45) Date of publication and mention of the grant of the patent: **16.11.2016**
(21) Application number: 08100413.7
(22) Date of filing: 14.01.2008
(51) Int. Cl.: H02H 1/06, H02H 3/08

(54) **Time fuse link current transformer trip system for circuit breaker**
Schutzschalter mit Zeitsicherungs-Stromumwandlungs-Auslösungssystem
Système de déclenchement de transformateur de courant avec liaison de fusée à retard pour disjoncteur

(43) Date of publication of application: 15.07.2009
(73) Proprietor: Eaton Industries (Netherlands) B.V., 7559 SC Hengelo (NL)
(72) Inventor: Pikkert, Alexander Rudolf Albertus, 7558 LA Hengelo (NL); Schoonenberg, Gerard Cornelis, 7559 CR Hengelo (NL); Lammers, Arend Jan Willem, 7558 TV Hengelo (NL)
(74) Representative: Eaton IP Group EMEA

(56) References cited:
- DE-C- 566 337
- GB-A- 330 606
- GB-A- 2 111 774
- US-A- 4 675 771

## Description

### Field of the invention

The present invention relates to protection circuitry for a three phase electrical supply system using a trip actuator, wherein the protection circuitry for each phase comprises a current transformer, each current transformer having a primary side which is connected to the phase, and a secondary side.

### Prior art

US patent publication US4,675,771 discloses a fault sensing system for a transformer network. A low voltage fuse is connected in series in a primary circuit of a current transformer and acts as a fault sensor. The publication discloses the trip circuit in detail in one embodiment, and it is noteworthy that three similar circuits are used for each phase. Furthermore, for proper operation, the burden resistor is necessary to drive the transformer in saturation.

German Utility model application DE-U-299 24 660 discloses a circuit for driving a protective switch in the case of under voltage. The detection circuit uses rectifier bridges connected to each of the three phases. The rectifier bridges are directly connected to the phase lines, and a resistor is needed in series with the trip coil to function properly.

International patent application WO2005/027295 discloses a circuit arrangement for monitoring fuses connected upstream from low-voltage power circuit breakers. Fuses in the phase lines are monitored using current transformers, in which the primary winding is connected parallel over the fuse, and in which the secondary winding is connected to a bridge rectifier. The outputs of each phase are commonly connected to the trip coil. Current through the coil is limited to a maximum value.

### Summary of the invention

The present invention seeks to provide an improved circuitry or circuit arrangement which allows to provide a safety function, such as short circuit protection, for a three phase electrical supply system, having a reduced number of components as compared to prior art circuit arrangements.

According to the present invention, protection circuitry according to claim 1 is provided. By using the fuse as a sensor, only a very limited number of components are needed to provide the protection circuitry. This embodiment further allows to use a full wave rectifier using four half bridges, which allows to provide a better trip actuating signal from the AC signals of the current transformers, using only a limited number of components.

In an embodiment, the fuse is connected to a rectifier for providing the trip actuating signal to the trip actuator. Such a direct drive of the trip actuator, e.g. in the form of a trip coil, greatly enhances the simplicity and thus reliability of the protection circuitry.

A direct current side of the rectifier of each phase is interconnected for providing a combined trip actuating signal to the trip actuator in a further embodiment. This embodiment allows to connect the current transformers of all phases to the rectifier in order to provide a single trip actuation signal to the trip actuator.

In a further embodiment, each current transformer comprises an additional secondary winding for providing the trip actuating signal. This allows to provide a suitable voltage level for driving the trip actuator, as a result of which the protection circuitry is more robust and reliable.

A first terminal of the secondary side of the current transformer is, in a further embodiment, connected to a ground terminal, and a second terminal provides the trip actuating signal. By using a ground terminal a defined potential is created in the circuitry.

In an even further embodiment, a first fuse is connected between a terminal of a current transformer associated with a first phase and a terminal of a current transformer of a second phase, a second fuse is connected between a terminal of a current transformer associated with a third phase and a terminal of a current transformer of a second phase, and a third fuse is connected between the terminal of the current transformer associated with the second phase and a ground terminal, By having such a circuit lay-out, it is possible to combine both short circuit and earth fault detection on the protection circuitry using a minimal number of components.

### Short description of drawings

The present invention will be discussed in more detail below, using a number of exemplary embodiments, with reference to the attached drawings, in which
Fig. 1 shows a circuit diagram of a first embodiment of the protection circuitry according to the present invention;
Fig. 2 shows a circuit diagram of a second embodiment of the protection circuitry according to the present invention;
Fig. 3 shows a circuit diagram of a third embodiment of the protection circuitry according to the present invention; and
Fig. 4 shows a circuit diagram of a fourth embodiment of the protection circuitry according to the present invention.

### Detailed description of exemplary embodiments

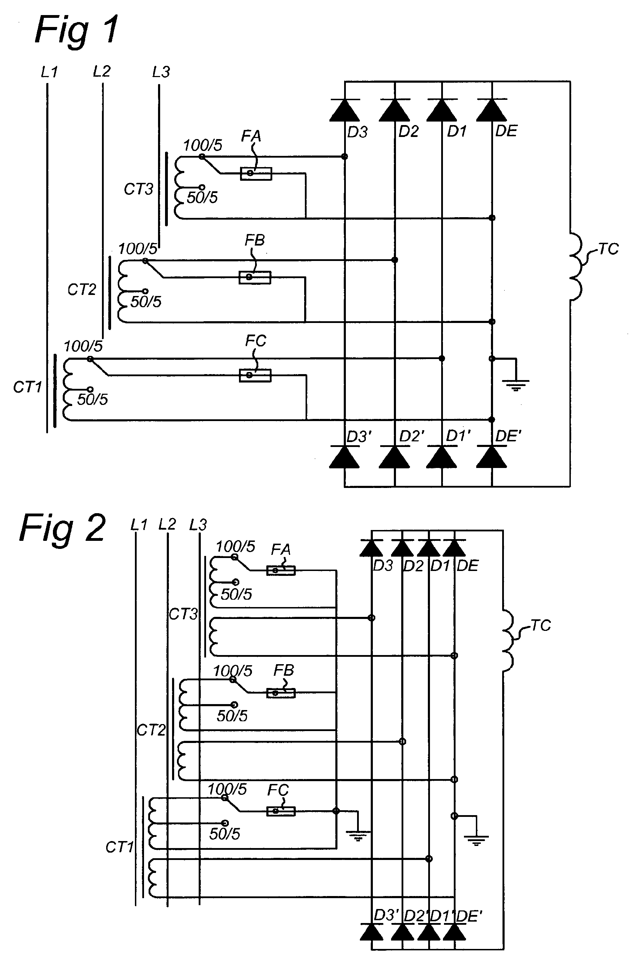

In Fig. 1-4, circuit diagrams are shown for four embodiments of the protection circuitry according to the present invention. On the left sides, the three phase lines L1, L2, L3 of a regular three phase electrical supply system (to be protected) are shown. With reference TC a trip coil is denoted which is the trip actuator for a safety trip switch (not shown), e.g. in the case of a short circuit or overcurrent situation. The terminals of the trip coil TC are connected on one side to cathodes of four diodes D1, D2, D3, DE, and on the other side to anodes of four further diodes D1', D2', D3', DE', which form a rectifier circuit. In other words, the trip coil TC is connected to the direct current sides of the rectifier diodes D1, D1', D2, D2', D3, D3', DE, DE', to receive a trip actuating signal.

In Fig. 1, a first embodiment is shown of a three phase short circuit protection circuit. Each phase line L1, L2, L3 is connected to a primary side of associated current transformers CT1, CT2, CT3. The current transformers CT1, CT2, CT3 are identical, and each current transformer has a winding ratio of e.g. 100/5 in order to allow good and robust measurement of current in the phase lines L1, L2, L3. A further terminal (designated with 50/5 in the embodiment of Fig. 1) is provided for the normal transformation use of the current transformers CT1, CT2, CT3.

The secondary side of each current transformer CT1, CT2, CT3 has two (secondary) terminals, which are connected to an associated fuse (FA, FB, FC). In normal operation, the fuse is shorting the terminals of the current transformer, and thus no voltage is present between these two terminals. The current transformers CT1, CT2, CT3 allow a current linearly dependent on the current through the phase line L1, L2, L3 to flow through the secondary side and associated fuse (FA, FB, FC).

In case of a short circuit between two of the phase lines L1, L2, L3, a very high current will flow in each of those lines, which will blow the associated fuses (FA, FB, FC) on the secondary side of the current transformers CT1, CT2, CT3. Also in the case of an overcurrent in one or more of the phase lines L1, L2, L3, the associated fuse (FA, FB, FC) will melt. As a result, in both cases, an AC voltage will be present on the terminals of the current transformer CT1, CT2, CT3.

In the embodiment of Fig. 1, the lower (first) terminal of each current transformer CT1, CT2, CT3, is connected to a common ground connection point or ground terminal, which is also connected to the anode of diode DE and the cathode of further diode DE' (forming a half bridge rectifier in its own). The upper (second) terminal of each current transformer CT1, CT2, CT3, is connected to associated phase half bridge rectifiers, formed by diode pairs D1, D1'; D2, D2'; and D3, D3'. This allows to have the current transformers CT1, CT2, CT3 all phases L1, L2, L3 to be connected to a single trips coil TC without the phases influencing each other.

In this manner, when a short circuit situation arises between phase lines L1, L2, L3, or an overcurrent arises in one or more of the phase lines L1, L2, L3, corresponding fuses are blown (FA, FB, FC), and the resulting voltage over the current transformers CT1, CT2, CT3 is rectified and used to drive the single trip coil TC.

The higher winding ratio indicated (100/5) allows to obtain a high enough voltage to correctly drive the trip coil TC.

Using this embodiment, a three phase protection circuitry is provided with a minimum number of components (only a single trip coil TC and thus also only a single protection switch driven by the trip coil TC) which is reliable in operation.

The idea underlying this protection circuitry is that a fuse connected to a current transformer can be ideally used as a sensor for a short circuit situation, generating a trip actuation signal for the trip actuator (in the above case, the AC voltage over the current transformer CT1, CT2, CT3 is transformed in an actuating signal to the trip coil TC). By combining the trip actuation signals from three fuses (sensors) using the diode rectifier circuitry as shown in Fig. 1, only a single trip coil TC is needed for providing a three phase short circuit or overcurrent protection.

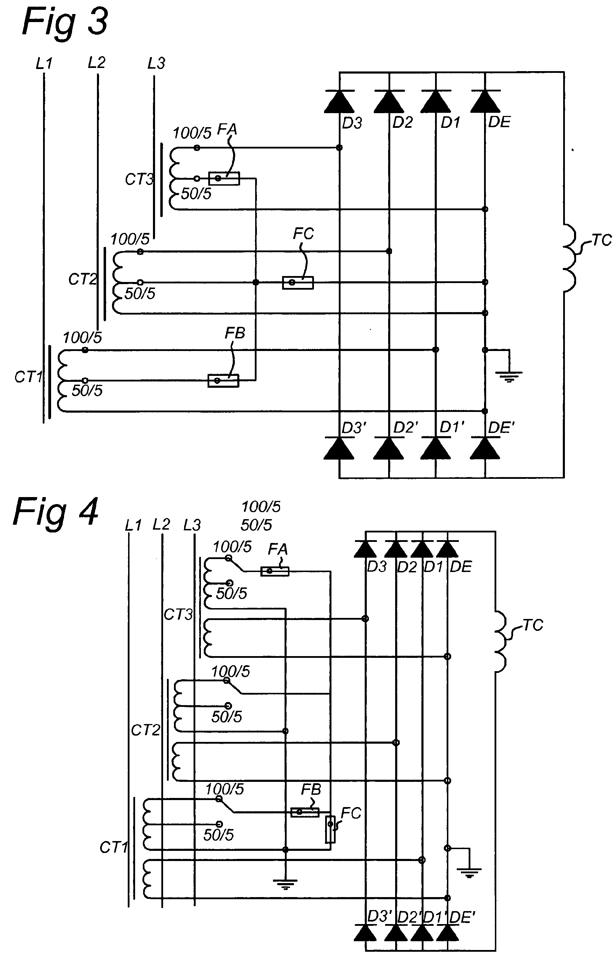

In Fig. 3, a further embodiment is shown, which provides a three phase short circuit protection in combination with an earth fault protection, with the same number of components as the embodiment of Fig. 1.

In this embodiment, the current transformers CT1, CT2, CT3 are provided with a normal terminal on the secondary side. In the embodiment shown, this normal tap is provided at e.g. 50/5 windings (i.e. a center tap), as compared to the 100/5 winding for the upper terminal.

A first fuse (FB) is provided between the normal terminals of current transformer CT1 and current transformer CT2. This fuse (FB) will blow in case of a short circuit between or overcurrent in phase lines L1 and L2. A second fuse (FA) is provided between the normal terminals of current transformer CT3 and current transformer CT2. This fuse (FA) will blow in case of a short circuit between or overcurrent in phase lines L2 and L3. In case of a short circuit between or overcurrent in phase lines L1 and L3, both fuses (FA and FB) will blow.

A third fuse (FC) is provided between the normal terminal of current transformer CT2 and the ground connection point. In case of an earth fault for phase line L2, this fuse (FC) will blow. In case of an earth fault for phase line L1 or L3, this fuse (FC) will blow together with the associated other fuse (FB, and FA, respectively).

As in the embodiment of Fig. 1, the lower terminal of each current transformer CT1, CT2, CT3, is connected to a common ground connection point, which is also connected to the anode of diode DE and the cathode of further diode DE' (forming a half bridge rectifier in its own). The other (upper) terminal of each current transformer CT1, CT2, CT3 (having a winding ratio of 100/5 as indicated to provide a sufficiently high voltage), is connected to associated phase half bridge rectifiers, formed by diode pairs D1, D1'; D2, D2'; and D3, D3'.

In normal operation, when all fuses FA, FB, FC are intact, the lower parts of current transformers CT1, CT2, CT3 (between lower terminal and normal terminal) are in short circuit through one or two of the fuses FA, FB, FC, and hence (almost) no voltage will be present on the upper terminal (basic functioning of transformer). As a result, no trip actuating signal is generated to the trip coil TC.

In case of a short circuit (overcurrent) or earth fault, one or more of the fuses (FA, FB, FC) will blow, resulting in a high AC voltage signal on the associated upper terminal. This AC voltage signal is rectified in the diode circuitry and provided as the trip actuating signal to the trip coil TC.

An even further embodiment is shown in the circuit diagram of Fig. 2, which is an alternative for the embodiment of Fig. 1. In this embodiment, the current transformers CT1, CT2, CT3 are provided with an additional secondary winding. As a result each current transformer CT1, CT2, CT3 has two secondary windings, of which one (the upper winding as shown in Fig. 3) is shorted by an associated fuse (FC, FB, FA, respectively), and of which the other one is connected to the rectifying circuitry formed by diodes D1, D1', D2, D2', D3, D3', DE, DE'. When the fuses are intact (normal operation), the current transformers CT1, CT2, CT3 each generate a current in the secondary part, but the fuses FA, FB, FC make sure no voltage is present between the terminals of the secondary winding. As a result, also no voltage will be present between the terminals of the additional secondary winding, and no trip actuation signal is provided to the trip coil TC.

Once a short circuit occurs, one or more of the fuses FA, FB, FC will blow, which causes an AC voltage to be present between the terminals of the associated secondary winding, and hence also between the terminals of the associated additional secondary winding. Via the diode rectifier circuitry a non-zero trip actuating signal will be provided to the trip coil TC. Because of the use of the additional secondary windings in the current transformers CT1, CT2, CT3, it is possible to provide a larger power and thus more robust trip actuation signal to the trip coil TC.

In Fig. 4, a further alternative embodiment is shown of the protection circuitry, which combines the embodiments of the protection circuitry of Fig. 2 and Fig. 3. Here, the lower terminals of the secondary windings of the current transformers are connected to a first ground connection. The lower terminals of the additional secondary windings are connected to their own second ground connection (and the diode pair DE, DE'), separate from the first ground connection. The ground connections serve only to provide a defined earth potential to the system.

For the skilled person it will be clear that the above embodiments present examples only of the present invention. Further alternatives and modifications are possible within the scope of the present application, which is defined by the appended claims and equivalents of the features described therein.

## Claims

1. Protection circuitry for a three phase (L1, L2, L3) electrical supply system using a trip actuator (TC), wherein the protection circuitry for each phase (L1, L2, L3) comprises a current transformer (CT1, CT2, CT3), each current transformer (CT1, CT2, CT3) having a primary side which is connected to the phase (L1, L2, L3), and a secondary side,
wherein a fuse (FA, FB, FC) is connected to two secondary terminals of the secondary side of the current transformer (CT1, CT2, CT3),
and wherein the fuse (FA, FB, FC) is used as a sensor for generating a trip actuating signal for the trip actuator (TC),
**characterized in that** the first terminal of the secondary side of the current transformer (CT1, CT2, CT3) of each of the three phases (L1, L2, L3) is connected to a single rectifier bridge.

2. Protection circuitry according to claim 1, wherein the fuse (FA, FB, FC) is connected to a rectifier for providing the trip actuating signal to the trip actuator (TC).

3. Protection circuitry according to claim 2, wherein a direct current side of the rectifier of each phase (L1, L2, L3) is interconnected for providing a combined trip actuating signal to the trip actuator (TC).

4. Protection circuitry according to claim 1, 2 or 3, wherein each current transformer (CT1, CT2, CT3) comprises an additional secondary winding for providing the trip actuating signal.

5. Protection circuitry according to any one of claims 1-4, wherein a first terminal of the secondary side of the current transformer (CT1, CT2, CT3) is connected to a ground terminal, and a second terminal provides the trip actuating signal.

6. Protection circuitry according to any one of claims 1-5, wherein a first fuse (FA, FB, FC) is connected between a terminal of a current transformer (CT1, CT2, CT3) associated with a first phase (L1, L2, L3) and a terminal of a current transformer (CT1, CT2, CT3) of a second phase (L1, L2, L3),
a second fuse (FA, FB, FC) is connected between a terminal of a current transformer (CT1, CT2, CT3) associated with a third phase (L1, L2, L3) and a terminal of a current transformer (CT1, CT2, CT3) of a second phase (L1, L2, L3),
and a third fuse (FA, FB, FC) is connected between the terminal of the current transformer (CT1, CT2, CT3) associated with the second phase (L1, L2, L3) and a ground terminal.

## Patentansprüche

1. Schutzschaltung für ein dreiphasiges (L1, L2, L3) elektrisches Versorgungssystem, das eine Auslöseeinrichtung (TC) verwendet,
wobei die Schutzschaltung für jede Phase (L1, L2, L3) einen Stromwandler (CT1, CT2, CT3) umfasst, jeder Stromwandler (CT1, CT2, CT3) aufweisend eine Primärseite, die mit der Phase (L1, L2, L3) verbunden ist, und eine Sekundärseite,
wobei eine Sicherung (FA, FB, FC) verbunden ist mit zwei sekundären Anschlüssen der sekundären Seite des Stromwandlers (CT1, CT2, CT3),
und wobei die Sicherung (FA, FB, FC) verwendet wird als ein Sensor zum Erzeugen eines Auslösesignals für die Auslöseeinrichtung (TC),
**dadurch gekennzeichnet, dass** der erste Anschluss der sekundären Seite des Stromwandlers (CT1, CT2, CT3) jeder der drei Phasen (L1, L2, L3) mit einer einzelnen Gleichrichterbrücke verbunden ist.

2. Schutzschaltung nach Anspruch 1, wobei Sicherung (FA, FB, FC) mit einem Gleichrichter verbunden ist, zum Bereitstellen des Auslösesignals an die Auslöseeinrichtung (TC).

3. Schutzschaltung nach Anspruch 2, wobei eine Gleichstromseite des Gleichrichters jeder Phase (L1, L2, L3) verschaltet ist zum Bereitstellen eines kombinierten Auslösesignals an die Auslöseeinrichtung (TC).

4. Schutzschaltung nach Anspruch 1, 2 oder 3, wobei jeder Stromwandler (CT1, CT2, CT3) eine zusätzliche Sekundärwicklung umfasst zum Bereitstellen des Auslösesignals.

5. Schutzschaltung nach einem der Ansprüche 1-4, wobei ein erster Anschluss der Sekundärseite des Stromwandlers (CT1, CT2, CT3) mit einem Erdanschluss verbunden ist und ein zweiter Anschluss das Auslösesignal bereitstellt.

6. Schutzschaltung nach einem der Ansprüche 1-5, wobei
eine erste Sicherung (FA, FB, FC) zwischen einem Anschluss eines Stromwandlers (CT1, CT2, CT3), zugehörig zu einer ersten Phase (L1, L2, L3), und einem Anschluss eines Stromwandlers (CT1, CT2, CT3) einer zweiten Phase (L1, L2, L3) verbunden ist,
eine zweite Sicherung (FA, FB, FC) zwischen einem Anschluss eines Stromwandlers (CT1, CT2, CT3), zugehörig zu einer dritten Phase (L1, L2, L3), und einem Anschluss eines Stromwandlers (CT1, CT2, CT3) einer zweiten Phase (L1, L2, L3) verbunden ist,
und eine dritte Sicherung (FA, FB, FC) zwischen einem Anschluss eines Stromwandlers (CT1, CT2, CT3), zugehörig zu der zweiten Phase (L1, L2, L3), und einem Erdanschluss verbunden ist.

## Revendications

1. Circuit de protection pour un système d'alimentation électrique triphasé (L1, L2, L3) utilisant un actionneur de déclenchement (TC), dans lequel le circuit de protection pour chaque phase (L1, L2, L3) comprend un transformateur de courant (CT1, CT2, CT3 ), chaque transformateur de courant (CT1, CT2, CT3) ayant un côté primaire qui est connecté à la phase (L1, L2, L3), et un côté secondaire,
dans lequel un fusible (FA, FB, FC) est connecté à deux bornes secondaires du côté secondaire du transformateur de courant (CT1, CT2, CT3),
et dans lequel le fusible (FA, FB, FC) est utilisé comme un capteur pour générer un signal d'actionnement de déclenchement pour l'actionneur de déclenchement (TC),
**caractérisé en ce que** la première borne du côté secondaire du transformateur de courant (CT1, CT2, CT3) de chacune des trois phases (L1, L2, L3) est connectée à un seul pont redresseur.

2. Circuit de protection selon la revendication 1, dans lequel le fusible (FA, FB, FC) est connecté à un redresseur pour fournir le signal d'actionnement de déclenchement à l'actionneur de déclenchement (TC).

3. Circuit de protection selon la revendication 2, dans lequel un côté courant continu du redresseur de chaque phase (L1, L2, L3) est interconnecté pour fournir un signal d'actionnement de déclenchement à l'actionneur de déclenchement (TC).

4. Circuit de protection selon la revendication 1, 2 ou 3, dans lequel chaque transformateur de courant (CT1, CT2, CT3) comprend un enroulement secondaire supplémentaire pour fournir le signal d'actionnement de déclenchement.

5. Circuit de protection selon l'une quelconque des revendications 1 à 4, dans lequel une première borne du côté secondaire du transformateur de courant (CT1, CT2, CT3) est connectée à une borne de masse, et une deuxième borne fournit le signal d'actionnement de déclenchement.

6. Circuit de protection selon l'une quelconque des revendications 1 à 5, dans lequel un premier fusible (FA, FB, FC) est connecté entre une borne d'un transformateur de courant (CT1, CT2, CT3) associé à une première phase (L1, L2 , L3) et une borne d'un transformateur de courant (CT1, CT2, CT3) d'une deuxième phase (L1, L2, L3),
un deuxième fusible (FA, FB, FC) est connecté entre une borne d'un transformateur de courant (CT1, CT2, CT3) associé à une troisième phase (L1, L2, L3) et une borne d'un transformateur de courant (CT1, CT2, CT3) d'une deuxième phase (L1, L2, L3),
et un troisième fusible (FA, FB, FC) est connecté entre la borne du transformateur de courant (CT1, CT2, CT3) associé à la deuxième phase (L1, L2, L3) et une borne de masse.
